# EUROPEAN PATENT APPLICATION

(11) **EP 3 644 614 A1**
(43) Date of publication of application: **29.04.2020**
(21) Application number: 18871036.2
(22) Date of filing: 23.10.2018
(51) Int. Cl.: H04N 21/2343, H04N 21/43, H04N 21/4402

(54) **VIDEO DATA PROCESSING METHOD AND VIDEO DATA PROCESSING DEVICE**

(30) Priority: 24.10.2017 CN 201711002967
(71) Applicant: Shanghai Zhonglian Technologies Ltd., Co, Shanghai 201419 (CN)
(72) Inventor: ZHONG, Guanghua, Nanchang Jiangxi 330008 (CN); ZHENG, Zihao, Nanchang Jiangxi 330008 (CN)
(74) Representative: Ridderbusch, Oliver
(86) International application number: PCT/CN2018/111519
(87) International publication number: WO 2019/080846

(57) **Abstract**

Provided in the present invention are a video data processing method and a video data processing device. The video data processing method comprises the following steps of: converting, by a transmitting end, video data into at least one video data frame at a first framerate; transmitting at least twice, by the transmitting end, a video data frame generated within a duration of a previous frame to the receiving end within a duration of each frame corresponding to the first framerate; receiving respectively, by the receiving end, one video data frame within durations of two adjacent frames corresponding to the first framerate; performing frame insertion operation on the two video data frames received in the preceding step to produce at least one inserted video data frame; and placing the inserted video data frame between the two video data frames to form a set of video data frames to be played back. When implemented, the technical solution above effectively reduces delay in a video data processing process, thus improving a real-time performance of interactive operation, and a hardware device does not need to be changed, thus having low costs.

## Description

### Technical Field

The present invention relates to the field of video processing, and more particularly, to a video data processing method and a video data processing device.

### Background Art

When playing a video by a video playback device, people need to decode video data and then transmit the video data to the playback device, for example, stored video data is decoded by a display card and then transmitted to a display screen at a certain framerate, and a decoding device is connected with the display screen by a video transmission interface such as MIPI, HDMI and DisplayPort. At present, the existing video framerates are 15 fps, 24 fps and 30 fps, and in the case of realizing a smooth viewing effect with human eyes, the framerate needs to be kept above 60 fps, which is also the reason why a refresh rate of the display screen is above 60 hz. However, since the framerate of the video data is different from the refresh rate of the display screen, lagging or jittering may occur when the video data is displayed on the display screen.

In order to solve the lagging problem, there is a video enhancement algorithm called MEMC (Motion Estimate and Motion Compensation) in the prior art, and the video enhancement algorithm performs frame insertion on the video data according to a motion vector of an object, so that a number of frames of the video data is equal to a number of frames required for refreshing the display screen. Since the number of the frames of the video data after the frame insertion is the same as the number of the frames on the display screen, and the video data only needs to be processed frame by frame on the display screen, the lagging or jittering problem will not occur on the display screen.

However, when the MEMC video enhancement algorithm is used to solve the lagging and jittering problems of the video, since at least two frames of data are required for calculating a frame insertion content in calculation of the motion vector, display of the video data will be delayed. That is to say, the inserted frame can only be calculated at least after receiving the second frame of video data participating in frame insertion operation, and delay in display of the video data on the display screen includes a waiting time for receiving the first frame of video data and the second frame of video data and a calculation time of the inserted frame, wherein the calculation time of the inserted frame is much less than a transmission time of the first frame of video data. For example, the framerate of the video data is 30 fps per second, and a waiting time for two frames is 66.6 ms, which means that the delay in display is at least 66.6 ms. If the video data and a user are interacted, such as a game operation interface, the delay in display will cause a problem of asynchronous interaction, thus reducing interactive operation experience of the user.

### Summary of the Invention

In order to overcome the defects in the prior art, the present invention is intended to provide a video data processing method and a video data processing device to realize a technical effect of reducing video processing delay by increasing a transmission speed of video data and advancing frame insertion operation.

The present invention discloses a video data processing method for processing video data transmitted from a transmitting end working at a first framerate to a receiving end working at a second framerate, which includes the following steps:
S101: converting, by the transmitting end, the video data into at least one video data frame at the first framerate;
S102: transmitting at least twice, by the transmitting end, a video data frame generated within a duration of a previous frame to the receiving end within a duration of each frame corresponding to the first framerate;
S103: receiving respectively, by the receiving end, one video data frame within durations of two adjacent frames corresponding to the first framerate;
S104: performing frame insertion operation on the two video data frames received in the step S103 to produce at least one inserted video data frame; and
S105: placing the inserted video data frame between the two video data frames to form a set of video data frames to be played back.

Preferably, when the step S102 is implemented, the transmitting end transmits the video data frame to the receiving end through a physical interface.

Preferably, the step S102 includes the following steps:
S102-1: writing at least twice a same video data frame into a cache unit in the transmitting end within a duration of one frame corresponding to the first framerate; and
S 102-2: transmitting the video data frame in the cache unit to the physical interface.

Preferably, when the step S103 is implemented, the receiving end selects the video data frame received for the first time within a duration of a same fame corresponding to the first framerate.

Preferably, after the step S105, the video data processing method further comprises the following step:
S106: displaying, by the receiving end, the video data frame to be played back at the second framerate.

The present invention further discloses a video data processing device, which includes a transmitting end working at a first framerate and a receiving end working at a second framerate, wherein the video data processing device includes:
a conversion module arranged at the transmitting end and converting the video data into at least one video data frame at the first framerate;
a transmitting module arranged at the transmitting end, and connected with the conversion module, wherein the transmitting end transmits at least twice a video data frame generated within a duration of a previous frame to the receiving end within a duration of each frame corresponding to the first framerate;
a receiving module arranged at the receiving end, and receiving respectively one video data frame within durations of two adjacent frames corresponding to the first framerate;
a frame insertion operation module arranged at the receiving end, connected with the receiving module, and performing frame insertion operation on the two video data frames received by the receiving module to produce at least one inserted video data frame; and
a framing module arranged at the receiving end, connected with the frame insertion operation module, and placing the inserted video data frame between the two video data frames to form a set of video data frames to be played back.

Preferably, the transmitting module transmits the video data frame to the receiving end through a physical interface.

Preferably, the transmitting module includes:
a cache unit arranged at the transmitting end and writing at least twice a same video data frame within a duration of one frame corresponding to the first framerate; and
a transmitting unit connected with the cache unit, and transmitting the video data frame in the cache unit to the physical interface.

Preferably, the receiving module selects the video data frame received for the first time within a duration of a same fame corresponding to the first framerate.

Preferably, the video processing device further includes:
a playback module arranged at the receiving end, connected with the framing module, and displaying the video data frame to be played back at the second framerate.

The present invention has the following beneficial effects compared with the prior art when the technical solutions above are adopted:
1. delay in a video data processing process is effectively reduced, and a real-time performance of interactive operation is improved, thus enhancing user experience; and
2. a hardware device does not need to be changed, thus having low costs.

### Brief Description of the Drawings

Fig. 1 is a flow chart complying with the video data processing method according to a preferred embodiment of the present invention;
Fig. 2 is a flow chart complying with the step S102 according to a preferred embodiment of the present invention;
Fig. 3 is a structure flow chart complying with the video data processing device according to a preferred embodiment of the present invention; and
Fig. 4 is a structure flow chart complying with the transmitting module according to a preferred embodiment of the present invention.

### Reference numerals:

10 refers to video data processing device, 11 refers to transmitting end, 111 refers to conversion module, 112 refers to transmitting module, 1121 refers to cache unit, 1122 refers to transmitting unit, 12 refers to receiving end, 121 refers to receiving module, 122 refers to frame insertion operation module, 123 refers to framing module, and 124 refers to playback module.

### Detailed Description of the Preferred Embodiments

The advantages of the present invention are further described hereinafter with reference to the drawings and the specific embodiments.

The exemplary embodiments are described in detail herein, and are illustratively shown in the drawings. When the following description refers to the drawings, unless otherwise indicated, the same numbers in different drawings indicate the same or similar elements. The embodiments described in the following exemplary embodiments do not represent all embodiments consistent with the present disclosure. On the contrary, they are merely examples of devices and methods consistent with some aspects of the present disclosure described in detail in the appended claims.

The terms used in the present disclosure are for the purpose of describing particular embodiments only and are not intended to limit the present disclosure. The singular forms of "a", "said" and "the" used in the present disclosure and the appended claims are also intended to include the plural forms, unless other meanings are clearly indicated by the context. It should also be understood that the term "and/or" used herein refers to and includes any or all possible combinations of one or more associated listed items.

It shall be understood that although the terms first, second, third, etc. may be used to describe various information in the present disclosure, the information should not be limited to these terms. These terms are only used to distinguish the information of the same type from each other. For example, the first information can also be referred to as the second information, and similarly, the second information can also be referred to as the first information without departing from the scope of the present disclosure. Depending on the context, the word "if" used herein can be explained as "in the case of", "when" or "in response to determine".

In the description of the present invention, it should be understood that the orientation or position relation indicated by the terms "longitudinal", "lateral", "upper", "lower", "front", "rear", "left", "right", "vertical", "horizontal", "top", "bottom", "inside", "outside" and the like is based on the orientation or position relation shown in the drawings, which is only used for convenience of description of the present invention and simplification of description instead of indicating or implying that the indicated device or element must have a specific orientation, and be constructed and operated in a specific orientation, and thus should not be understood as a limitation to the present invention.

In the description of the present invention, the terms "installation", "connected" and "connection" should be understood in broad sense unless otherwise specified and defined. For example, they can be mechanical connection or electrical connection, can also be connected inside two components, can be directly connected, and can also be indirectly connected through an intermediate medium. The specific meanings of the above terms can be understood in a specific case by those of ordinary skills in the art.

In the following description, the postfixes such as "module", "component" or "unit" used to indicate elements are only used to facilitate the description of the present invention and have no specific meanings in themselves. Therefore, the "module" and "component" can be used in a mixed way.

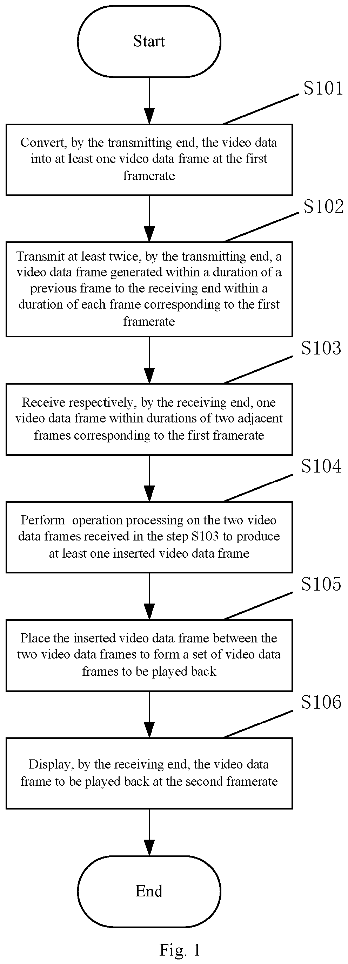

With reference to Fig. 1 which shows a flow chart complying with the video data processing method according to a preferred embodiment of the present invention, the video data processing method includes following steps.

In S101, the transmitting end 11 converts the video data into at least one video data frame at the first framerate.

The transmitting end 11 may be a device with a decoding capability such as a player, a display card, etc., which decodes a video file in a digital format into a playable video signal, and the video signal is composed of multiple frames of video data. Each frame of video data is generated by the transmitting end 11 according to the first framerate, the first framerate may be 15 fps, 24 fps or 30 fps, wherein fps refers to a number of frames transmitted per second, and the more the frames are transmitted per second, the smoother the motion will be displayed. Generally, a minimum value is 30 fps to avoid unsmooth motion, and some computer video formats can only provide 15 frames per second. The video data may be in data formats such as wmv, rmvb, 3gp, mp4, etc., and is often stored in a storage device in a form of a video file. The video data is converted into at least one video data frame in the step, and the video data frame, namely a video data content played back in each frame, is often in a form of a pixel picture, and can be regarded as a picture; and when the first framerate is 15 fps, 15 video data frames exist in 1 second. According to a playback duration of the video data and different first framerates, a number of converted video data frames is also different. The video data frames are bases for subsequent playback operation, and are played back frame by frame by a playback device to realize a dynamic video effect.

In S102, the transmitting end 11 transmits at least twice a video data frame generated within a duration of a previous frame to the receiving end 12 within a duration of each frame corresponding to the first framerate.

The receiving end 12, namely a video playback device, may be a display screen, a television, etc., and works at a second framerate which may be 60 fps or more. The second framerate may be 2 times or more times of the first framerate to realize a smooth playback effect. Similarly, when a user selects to fast forward, the video playback device will increase the second framerate to realize a fast-forward effect, and the first framerate will also be synchronously increased during fast forwarding.

In the prior art, a duration for the transmitting end 11 to transmit the video data frame is approximately the same as a duration for playing back and displaying one video data frame, which means that when one frame is transmitted, one frame is played back; and the currently transmitted video data frame is a video data frame converted from the video file within the duration of the previous frame. For example, when the first framerate is 30 fps, a duration of each corresponding frame is 33.3 milliseconds, and one video data frame is converted within a duration of each frame in the step S101; a first video data frame is converted by the transmitting end 11 within 0 millisecond to 33.3 milliseconds, then the first video data frame is transmitted to the receiving end 12 within a duration of a second frame ranging from 33.3 milliseconds to 66.6 milliseconds, and the first video data frame is transmitted once only, while the second video data frame is continuously converted by the transmitting end 11; the second video data frame is transmitted to the receiving end 12 by the transmitting end 11 within 66.6 milliseconds to 99.9 milliseconds; and by analogy, the video data frames are continuously transmitted frame by frame until the video file is completely transmitted.

The prior art above is improved in the step, the transmitting end 11 transmits at least twice the video data frame to the receiving end 12 within the duration of each frame, which means that the same video data frame is repeatedly transmitted at least twice within the duration of one frame, which compresses a transmission time of one video data frame. A key point in the step is that a generation speed and a transmission speed of the video data frame are separated, and a technical route that the generation speed and the transmission speed are basically coordinated and synchronized in the prior art is broken through. The transmission speed of the video data frame can be increased by increasing a utilization rate of a transmission interface. For example, a maximum data transmission speed of a HDMI interface is 48 Gbps, and a 1080 p video and an 8-channel audio signal require less than 0.5 GB/s. Therefore, the transmission interface still has a large improvement capacity, and the transmission speed of the video data frame can be increased by twice or even tens of times.

For example, when the first framerate is 30 fps, a duration of each corresponding frame is 33.3 milliseconds, and one video data frame is converted within the duration of each frame in the step S101; the first video data frame is converted by the transmitting end 11 within 0 millisecond to 33.3 milliseconds, and then the first video data frame is transmitted thrice to the receiving end 12 within the duration of the second frame ranging from 33.3 milliseconds to 66.6 milliseconds, which means that the first video data frame is transmitted for the first time within 33.3 milliseconds to 44.4 milliseconds, transmitted for the second time within 44.4 milliseconds to 55.5 milliseconds, and transmitted for the third time within 55.5 milliseconds to 66.6 milliseconds; and the second video data frame is converted by the transmitting end 11 within 33.3 milliseconds to 66.6 milliseconds, and then the second video data frame is transmitted thrice to the receiving end 12 by the transmitting end 11 within 66.6 milliseconds to 99.9 milliseconds. By analogy, the video data frame is repeatedly and continuously transmitted within the duration of the same frame until the video file is completely transmitted. It shall be noted that the duration of the frame for realizing the step is calculated at the first framerate, namely a playback duration of each frame at the first framerate.

In S103, the receiving end 12 receives respectively one video data frame within durations of two adjacent frames corresponding to the first framerate.

A receiving mode of the receiving end 12 is described in the step. The same video data frame is still transmitted at least twice within the same duration corresponding to the first framerate in the step S102, which means that the receiving end 12 receives at least twice the same video data frame within the same duration. The receiving end 12 only needs to select one video data frame from the same video data frames received for many times for processing and playing back, and other repeated video data frames can be discarded. In the step, the receiving end 12 receives respectively one video data frame within durations of two adjacent frames corresponding to the first framerate.

For example, when the first framerate is 30 fps, the duration of each corresponding frame is 33.3 milliseconds, the receiving end 12 receives thrice the first video data frame within the duration of the second frame ranging from 33.3 milliseconds to 66.6 milliseconds, and the first reception is finished at a moment of a 44.4^{th} millisecond, the second reception is finished at a moment of a 55.5^{th} millisecond, and the third reception is finished at a moment of a 66.6^{th} millisecond; and the receiving end 12 receives thrice the second video data frame within a duration of a third frame ranging from 66.6 milliseconds to 99.9 milliseconds, and then only one of the first video data frames and one of the second video data frames are selected respectively as bases for subsequent frame insertion operation. Similarly, the receiving end 12 receives one video data frame within every duration of one frame, and by analogy, the video data frame is received once within every durations of two adjacent frames until all the video data are completely received. It shall be noted that the duration of the frame for realizing the step is calculated at the first framerate.

In the prior art, the frame insertion operation can only be performed by relying on two video data frames. Therefore, the receiving end 12 can only receive the first video data frame and the second video data frame at end of the duration of the third frame, and then subsequent frame insertion operation can be performed, so that an inserted frame is actually played back at least until end of the duration of the third frame, namely after a 99.9^{th} millisecond.

A receiving time of the receiving end 12 is compressed in the step, in the example, if the second video data frame received for the first time is selected within the duration of the third frame, the second video data frame is completely received at a 77.7^{th} millisecond,, and then the frame insertion operation can be immediately performed. Since a time of the frame insertion operation is very short relative to the duration of one frame, such as about 3 milliseconds, the inserted frame can be started to play back at an 80^{th} millisecond, which reduces frame insertion delay compared with the prior art and shortens video playback delay as a whole. If the transmitting end 11 transmits the same video data frame for more times within the duration of the same frame in the step S102, the receiving end 12 can receive one video data frame in a shorter time within the duration of one frame, and the frame insertion operation is further advanced, thus making video processing delay shorter.

In S104, frame insertion operation is performed on the two video data frames received in the step S103 to produce at least one inserted video data frame.

The frame insertion operation is performed in the step, and objects participating in the operation are the two video data frames received in the step S103. A common frame insertion operation algorithm is MEMC, with a full name of Motion Estimation and Motion Compensation, which is a motion picture quality compensation technology often used in a liquid crystal display television. A principle thereof is to insert a motion compensation frame between two frames of traditional images by a dynamic image system to increase a refresh rate of an ordinary flat panel television from 50/60 Hz to 100/120 Hz. In this way, a motion picture is clearer and smoother, which is better than a normal response effect, thus realizing effects of removing an afterimage of a previous frame of image and improving a dynamic definition, and reducing image trailing to a degree that the image trailing is difficult for human eyes to perceive. For example, an original frame sequence of a flowing picture is 1, 2, 3, 4, 5 and 6; and the MEMC technology analyzes a motion trend of an image in horizontal and vertical directions through block partition, and then inserts an intermediate frame among all the original frames, namely the inserted video data frame, a frame sequence after frame insertion becomes 1, 1C, 2, 2C, 3, 3C, 4, 4C, 5, 5C and 6, and in this way, an original field frequency is insufficient to display all the frames now. Therefore, the field frequency needs to be increased twice, which means that the field frequency is increased from 50/60 Hz to 100/120 Hz, and thus, it can be seen that the MEMC technology and a frequency multiplication technology are inseparable.

After the frame insertion operation, the receiving end 12 will play back a final video data frame at the second framerate. Considering a multiple relationship between the first framerate and the second framerate, a number of frames inserted between the two video data frames is also different. For example, if the first framerate is 30 fps and the second framerate is 60 fps, one inserted video data frame can be inserted between every two video data frames. If the second framerate is 120 fps, three inserted video data frames shall be inserted between every two video data frames.

In S105, the inserted video data frame is placed between the two video data frames to form a set of video data frames to be played back.

Framing operation is performed in the step, the inserted video data frame obtained in the step S104 is inserted among the received video data frames to form a set of video data frames to be played back, so that a playback device can play back the video data frames frame by frame at a working frequency of hardware, namely the second framerate, without lagging.

As a further improvement to the video data processing method, when the step S102 is implemented, the transmitting end 11 transmits the video data frame to the receiving end 12 through a physical interface. The improved embodiment defines a connection mode of the transmitting end 11 and the receiving end 12, namely connection by the physical interface, and the physical interface is a video transmission interface such as MIPI, HDMI, DisplayPort, etc. As a further improvement to the video data processing method, when the step S103 is implemented, the receiving end 12 selects the video data frame received for the first time within the duration of the same frame corresponding to the first framerate. The improved embodiment defines the video data frame that the receiving end 12 selects to receive in the step S103, which means that the first video data frame received within the duration of the same frame is selected, so that the video data frame can be received at the first time, a waiting time for the frame insertion operation is shortened, and video playback delay is further shortened.

As a further improvement to the video data processing method, after the step S105, the video data processing method further includes the following step.

In S106, the receiving end 12 displays the video data frame to be played back at the second framerate.

Playback operation is performed in the step, and a set of video data frames including the inserted video data frame after framing are played back on a display device. Each video data frame has recorded pixel information required for playing back a picture, and a hardware device can display the pixel information to play back the video data. Since the steps S103, S104, and S105 are continuously implemented, and video data frames to be played back can be continuously generated, the step does not need to wait for receiving many video data frames before playing back, and the playback operation can be performed at the second framerate after finishing the framing in the step S105.

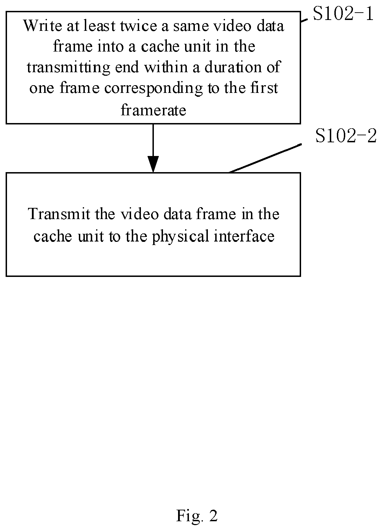

With reference to Fig. 2 which shows a flow chart complying with the step S102 according to a preferred embodiment of the present invention, the step S102 includes the following steps.

In S102-1, a same video data frame is written at least twice into a cache unit 1121 in the transmitting end 11 within a duration of one frame corresponding to the first framerate.

After the transmitting end 11 generates the video data frame, the video data frame is stored into the cache unit 1121 in the transmitting end 11, and the cache unit is also called Frame Buffer in some application environments. The same video data frame is written at least twice into the cache unit 1121 within the duration of one frame corresponding to the first framerate in the step, which means that the same video data frame is transmitted at least twice. The step is finished in a code layer, which means that a writing instruction is implemented at least twice to the cache unit 1121 within the duration of one frame.

In S102-2, the video data frame in the cache unit 1121 is transmitted to the physical interface.

Transmission is performed in the step.

The video data frame in the cache unit 1121 is transmitted to the physical interface, the step is realized by a driver layer, and software data is converted into an electric signal to be transmitted through the physical interface. The implementation of the step shall satisfy the protocol of the physical interface. In other embodiments of the present invention, transmission of the same video data frame for many times within the duration of the same frame can further increase a working frequency of a transmission interface, for example, in a video transmission device using TMDS, namely a transitional minimized differential signal, an effect of accelerating a video data transmission speed can be realized by increasing a frequency of line synchronization.

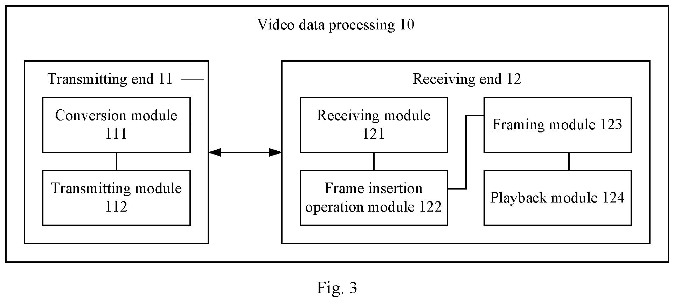

With reference to Fig. 3 which shows a structure flow chart complying with the video data processing device 10 according to a preferred embodiment of the present invention, the video data processing device 10 includes a transmitting end 11 working at a first framerate and a receiving end 12 working at a second framerate, wherein the video data processing device 10 further includes the following modules.

### - Conversion module 111

The conversion module 111 is arranged at the transmitting end 12 and converts the video data into at least one video data frame at the first framerate. The conversion module 111 may be a device with a decoding capability such as a player, a display card, etc., and converts the video data in different data formats into a plurality of video data frames, and the first framerate is satisfied when the video data frame is converted.

### - Transmitting module 112

The transmitting module 112 is arranged at the transmitting end 11, is connected with the conversion module 111, and transmits at least twice a video data frame generated within a duration of a previous frame to the receiving end 12 within a duration of each frame corresponding to the first framerate. The transmitting module 112 receives the converted video data frame from the conversion module 111 and transmits the converted video data frame to the receiving end 12. The transmitting module 112 repeatedly transmits at least twice the same video data frame within the duration of one frame, and compresses a transmission time of one video data frame.

### - Receiving module 121

The receiving module 121 is arranged at the receiving end 12, and receives respectively one video data frame within durations of two adjacent frames corresponding to the first framerate. The receiving module 121 receives the video data frame transmitted by the transmitting module 112, and receives at least twice the same video data frame within the duration of the same frame. The receiving module 121 only receives one video data frame within the duration of the same frame, and can receive respectively two video data frames within the durations of two adjacent frames, thus providing bases for subsequent frame insertion operation. Since the receiving module 121 receives one video data frame within at most one-half of the duration of one frame, a remaining time in the duration of the frame can be used for frame insertion operation, so that a starting time of the frame insertion operation is advanced relative to the prior art. A duration of a frame referenced by the receiving module 121 in operation is calculated at the first framerate, namely a playback duration of each frame at the first framerate.

### - Frame insertion operation module 122

The frame insertion operation module 122 is arranged at the receiving end 12, is connected with the receiving module 121, and performs frame insertion operation on the two video data frames received by the receiving module 121 to produce at least one inserted video data frame. The frame insertion operation module 122 obtains two adjacent video data frames from the receiving module 121, and performs the frame insertion operation based on the two video data frames. The frame insertion operation module 122 is built in with a frame insertion operation algorithm, such as MEMC, namely Motion Estimation and Motion Compensation.

### - Framing module 123

The framing module 123 is arranged at the receiving end 12, is connected with the frame insertion operation module 122, and places the inserted video data frame between the two video data frames to form a set of video data frames to be played back. The framing module 123 obtains the inserted video data frame from the frame insertion operation module 122, and then obtains the received video data frame from the receiving module 121, the inserted video data frame is inserted between two video data frames used as calculation bases thereof to form a set of video data frames to be played back.

As a further improvement to the video data processing device 10, the transmitting module 112 transmits the video data frame to the receiving end 12 through a physical interface. The improved embodiment defines a connection mode of the transmitting end 11 and the receiving end 12, namely connection by the physical interface, and the physical interface is a video transmission interface such as MIPI, HDMI, DisplayPort, etc. The transmitting module 112 is connected with the receiving module 121 through the physical interface to transmit the video data frame.

As a further improvement to the video data processing device 10, the receiving module 121 selects the video data frame received for the first time within the duration of the same frame corresponding to the first framerate. The improved embodiment defines the video data frame that the receiving module 121 selects to receive, which means that the first video data frame received within the duration of the same frame is selected, so that the video data frame can be received at the first time, a waiting time for the frame insertion operation is shortened, and the video processing delay is further shortened.

As a further improvement to the video data processing device 10, the video data processing device 10 further includes the following module.

### - Playback module 124

The playback module 124 is arranged at the receiving end 12, is connected with the framing module 123, and displays the video data frame to be played back at the second framerate. The playback module 124 obtains the video data frame to be played back from the framing module 123 and plays back the video data frame at the second framerate. The playback module 124 may be a display screen and a display circuit thereof, the display circuit is used to convert the video data frame into an electric signal showing a physical pixel, and the display screen displays the physical pixel.

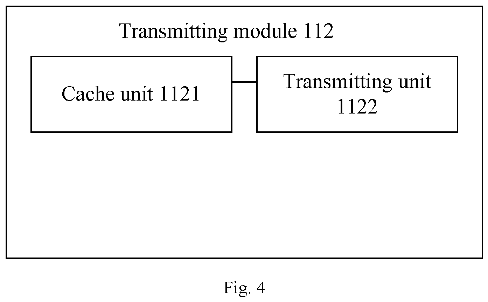

With reference to Fig. 4 which shows a structure flow chart complying with the transmitting module 112 according to a preferred embodiment of the present invention, the transmitting module 112 includes the following units.

### - Cache unit 1121

The cache unit 1121 is arranged at the transmitting end 11 and writes at least twice a same video data frame within a duration of one frame corresponding to the first framerate. The cache unit 1121 may be a physical storage medium capable of storing data, such as a memory, a hard disk, etc. In the improved embodiment, the same video data frame is written at least twice into the cache unit 1121 within the duration of one frame, which compresses a transmission time.

### - Transmitting unit 1122

The transmitting unit 1122 is connected with the cache unit 1121, and transmits the video data frame in the cache unit 1121 to the physical interface. The transmitting unit 1122 is a driver layer, converts a video data frame in a software form into an electric signal and then transmits the electric signal through the physical interface. The transmitting unit 1122 transmits data according to the protocol of the physical interface.

It should be noted that the embodiments of the present invention have a better implementation performance and are not intended to limit the present invention in any form. Those skilled in the art may change or decorate the technical contents disclosed above into equivalent effective embodiments. Any modification or equivalent change and decoration to the embodiments above according to the technical essence of the present invention without departing from the contents of the technical solutions of the present invention should still fall within the scope of the technical solutions of the present invention.

## Claims

1. A video data processing method for processing video data transmitted from a transmitting end working at a first framerate to a receiving end working at a second framerate, comprising the following steps:
S101: converting, by the transmitting end, the video data into at least one video data frame at the first framerate;
S102: transmitting at least twice, by the transmitting end, a video data frame generated within a duration of a previous frame to the receiving end within a duration of each frame corresponding to the first framerate;
S103: receiving respectively, by the receiving end, one video data frame within durations of two adjacent frames corresponding to the first framerate;
S104: performing operation processing on the two video data frames received in the step S103 to produce at least one inserted video data frame; and
S105: placing the inserted video data frame between the two video data frames to form a set of video data frames to be played back.

2. The video data processing method according to claim 1, wherein,
when the step S102 is implemented, the transmitting end transmits the video data frame to the receiving end through a physical interface.

3. The video data processing method according to claim 2, wherein,
the step S102 comprises the following steps:
S102-1: writing at least twice a same video data frame into a cache unit in the transmitting end within a duration of one frame corresponding to the first framerate; and
S102-2: transmitting the video data frame in the cache unit to the physical interface.

4. The video data processing method according to any one of claims 1 to 3, wherein,
when the step S103 is implemented, the receiving end selects the video data frame received for the first time within a duration of a same fame corresponding to the first framerate..

5. The video data processing method according to any one of claims 1 to 3, wherein,
after the step S105, the video data processing method further comprises the following step:
S106: displaying, by the receiving end, the video data frame to be played back at the second framerate.

6. A video data processing device, comprising a transmitting end working at a first framerate and a receiving end working at a second framerate, wherein the video data processing device comprises:
a conversion module arranged at the transmitting end and converting the video data into at least one video data frame at the first framerate;
a transmitting module arranged at the transmitting end, and connected with the conversion module, wherein the transmitting end transmits at least twice a video data frame generated within a duration of a previous frame to the receiving end within a duration of each frame corresponding to the first framerate;
a receiving module arranged at the receiving end, and receiving respectively one video data frame within durations of two adjacent frames corresponding to the first framerate;
a frame insertion operation module arranged at the receiving end, connected with the receiving module, and performing frame insertion operation on the two video data frames received by the receiving module to produce at least one inserted video data frame; and
a framing module arranged at the receiving end, connected with the frame insertion operation module, and placing the inserted video data frame between the two video data frames to form a set of video data frames to be played back.

7. The video data processing device according to claim 6, wherein,
the transmitting module transmits the video data frame to the receiving end through a physical interface.

8. The video data processing device according to claim 7, wherein,
the transmitting module comprises:
a cache unit arranged at the transmitting end and writing at least twice a same video data frame within a duration of one frame corresponding to the first framerate;
a transmitting unit connected with the cache unit, and transmitting the video data frame in the cache unit to the physical interface.

9. The video data processing device according to any one of claims 6 to 8, wherein,
the receiving module selects the video data frame received for the first time within a duration of a same fame corresponding to the first framerate.

10. The video data processing device according to any one of claims 6 to 8, wherein,
the video processing device further comprises:
a playback module arranged at the receiving end, connected with the framing module, and displaying the video data frame to be played back at the second framerate.
